# EUROPEAN PATENT SPECIFICATION

(11) **EP 0 649 858 B1**
(45) Date of publication and mention of the grant of the patent: **16.04.1997**
(21) Application number: 94203080.0
(22) Date of filing: 22.10.1994
(51) Int. Cl.: C08F 2/18

(54) **Method for preparing polymeric particles**
Verfahren zur Herstellung von Polymerpartikeln
Méthode de préparation de particules de polymères

(30) Priority: 25.10.1993 US 142752
(43) Date of publication of application: 26.04.1995
(73) Proprietor: EASTMAN KODAK COMPANY, Rochester, New York 14650-2201 (US)
(72) Inventor: Woodgate, Paul Edward, c/o EASTMAN KODAK COMPANY, Rochester, New York 14650-2201 (US)
(74) Representative: Nunney, Ronald Frederick Adolphe

(56) References cited:
- GB-A- 948 747
- US-A- 2 932 629
- US-A- 3 328 374
- US-A- 3 786 115

## Description

### Field of the Invention

This invention relates to a method of preparing polymeric particles and particularly to a method of preparing large uniformly sized polymeric particles which have particular application as grinding media in milling apparatus for the preparation of small particle pharmaceutical products. The invention is also applicable for the preparation of particles for the electrophotographic and cosmetic industries.

U.S. Patent 5,145,684 relates to particles having a size less than 400 nanometers which can be formulated into pharmaceutical compositions by the use of a grinding media such as stabilized zirconium oxide, stainless steel, alumina, titantia and the like.

EP-A-0 600 528 entitled Method of Grinding Pharmaceutical Substances is an improvement on the invention of the foregoing U.S. patent and relates to using polymeric particles having a size in the range of from about 0.1 to 3 mm as a grinding media to prepare pharmaceuticals.

U.S. Patents 2,932,629; 2,934,530; 4,833,060 and 5,133,992 describe a method of making particulate materials by a process known as limited coalescence. In this process, a solid particulate colloidal stabilizer, such as silica, is used to limit the coalescence of droplets containing polymerizable monomer in an aqueous medium. The monomer droplets within the aqueous medium include other materials such as initiators and the like necessary for completing the reaction to form polymer particles. The droplets are formed by a sizing operation including homogenization mixing and the like and are stabilized against further growth by the action of the solid particulate colloidal stabilizer. The reaction is then completed forming the polymeric particles.

While this technique has been employed to prepare fairly uniform sized polymeric particles, it has not been found useful in the preparation of larger sized polymeric particles, ie, particles having an average diameter greater than 200 micrometers.

Thus, there is a substantial need for a method of making uniformly sized particles having an average diameter greater than 200 micrometers for a number of uses including the grinding media for pharmaceutical products, as carrier particles in the electrophotographic industry and the like.

### Summary of the Invention

The invention contemplates a method of preparing particulate polymeric beads having a uniform size distribution and an average particle diameter from about 200 to about 1,000 micrometers by forming a suspension of monomer droplets having a particle size of at least 200 micrometers in a continuous aqueous phase containing an effective amount of a solid particulate suspending agent to limit the coalescence of the monomer droplets within the average particle diameter range of 200 to 1,000 micrometers, adding a water soluble protective colloid to the suspension and heating to cause the monomer droplets to polymerize.

The process in accordance with this invention provides uniform larger size spherical particles that are especially suitable for grinding media in the preparation of small particle pharmaceutical compositions, cosmetics and the like. Particles prepared according to the invention also find particular use as polymeric carrier particles for use for catalysts and the like for use in chemical synthesis. The advantages of the larger size particles as catalyst carriers is that it permits the ready removal of the catalyst from the reaction system by simple filtration techniques.

### Description of Preferred Embodiments

The process employed in the preparation of the particles in accordance with this invention having an average particle diameter greater than 200 micrometers and preferably from about 300 to about 1,000 micrometers and most preferably 300 to 900 micrometers is generically referred to as limited coalescence. However, as indicated above, limited coalescence, which is a subset of suspension polymerization has not found utility in the preparation of particles having an average mean diameter much greater than about 100 micrometers. This is due primarily to the difficulty in reproducibly forming monomer droplets in water (oil in water) larger than 100 micrometers and from the instability of such reaction mixtures, resulting in gross agglomeration during the polymerization reaction and therefore a useless product.

The invention herein contemplates a limited coalescence method of making particles wherein an effective amount to stabilize the average diameter of the monomer droplets within the size stated above, preferably from about 0.05 to about 0.5 percent by weight, based on the weight of the monomer droplets and preferably about 0.1 to about 0.4 percent of a particulate suspension agent is employed and prior to the polymerization of the monomer droplets in the aqueous media a water soluble protective colloid is added. The monomer droplets are then polymerized.

In this limited coalescence technique for forming particles, a polymerizable monomer or mixture of monomers is added to an aqueous medium containing a particulate suspension stabilizer to form a discontinuous (oil droplets) phase in a continuous (water) phase. In a preferred embodiment, the particulate stabilizer has a particle size of at least 50 nanometers. Preferably, the size of the particulate suspension stabilizer is from 60 to 100 nanometers and most preferably from 75 to 85 nanometers. The aqueous continuous phase may include a free radical scavenger such as, for example potassium dichromate which prevents emulsion polymerization occurring within the water phase and a promoter such as, for example, methylaminoethanol adipate which drives the particulate suspension stabilizer to the surface of the monomer droplets. A free radical initiator, such as an azo compound or peroxide, is generally added along with the monomer to initiate the polymerization reaction. The monomer droplets are next sized by agitation of the suspension to achieve the desired size of the oil droplets in the aqueous phase. The sizing generally takes place by first stirring the suspension to form a crude emulsion. The crude emulsion is next subjected to high shearing forces by agitation, homogenization or the like to reduce the monomer droplets to less than the final desired size. The monomer droplets then coalesce to the desired final size determined by the quantity of particulate stabilizer present. The particulate stabilizer coats the surface of the monomer droplets thus preventing further increase in size by coalescence. At this point in the process, a water soluble protective colloid is added to the aqueous suspension. The water soluble protective colloid aids the particulate suspension stabilizer in maintaining the average particle diameter within the range of 200 to 1,000 micrometers. In the absence of the protective colloid, the droplets agglomerate during the polymerization into a useless mass. The protective colloid is employed in an effective amount to prevent agglomeration during polymerization, preferably in an amount of at least about 0.25 percent by weight and most preferably in an amount of from about 0.3 to about 5 percent by weight, based on the weight of the monomer present.

The suspension is next heated with stirring to cause the monomer droplets to polymerize. After reaction is completed the thus formed particles are separated from the aqueous media by any suitable technique including filtration or centrifuging. Finally, if desired the particulate suspension stabilizing agent and the protective colloid stabilizer are removed from the particulate product by washing. When silica is employed as the suspension stabilizing agent, it is readily removed by washing the particles in dilute sodium hydroxide. The particles are then further washed in water to remove the residual sodium hydroxide.

In practicing this invention, any suitable polymerizable ethylenically unsaturated monomer or mixture of monomers may be employed such as for example, styrene, vinyltoluene, p-chlorostyrene; vinylnaphthalene; ethylenically unsaturated mono olefins such as ethylene, propylene, butylene and isobutylene, vinyl halides such as vinyl chloride, vinyl bromide, vinyl fluoride, vinyl acetate, vinyl propionate, vinyl benzoate and vinyl butyrate; esters of alphamethylene aliphatic monocarboxylic acids such as methylacrylate, ethylacrylate, n-butylacrylate, isobutylacrylate, dodecylacrylate, n-octylacrylate, 2-chloroethylacrylate, phenylacrylate, methyalphachloroacrylate, methyl methacrylate, ethyl methacrylate and butyl methacrylate; acrylonitrile, methacrylonitrile, acrylamide, vinyl ethers such as vinyl methyl ether, vinyl isobutyl ether and vinyl ethyl ether; vinyl ketones such as vinyl methylketone, vinyl hexylketone; vinylidene halides such as vinylidene chloride and vinylidene chlorofluoride; and N-vinyl compounds such as N-vinyl pyrrole, N-vinyl carbazole, N-vinyl indole and N-vinyl pyrrolidone, divinyl benzene, ethylene glycol dimethacrylate, mixtures thereof; and the like. A particularly suitable mixture of monomers for preparing grinding media is a mixture of styrene and divinyl benzene.

Any suitable particulate suspension stabilizer may be employed, such as, for example, colloidal silica, bentonite, aluminum oxide, polymeric particles such as those set forth in U.S. Patent 5,133,992 which is herein incorporated by reference, and the like. The preferred particulate suspension agent is a 40 percent colloidal suspension of silica having a diameter of 80 nanometers sold by Nalco Company under the trade designation Nalcoag 2329.

Suitable initiators for the polymerization of the monomer include peroxides, hydroperoxides and azo type initiators such as, for example, benzoyl peroxide, lauroyl peroxide, 2,2'-azobis(2,4-dimethylpentane nitrile), 2,2'-azobis(2-methyebutanenitrile) hydrogen peroxide, 2,2'-azobis(2-amidinopropane hydrochloride) and the like.

Any suitable promoter that is water soluble and affects the hydrophilic/hydrophobic balance of the solid dispersing agent in the aqueous solution may be employed in order to drive the solid dispersing agent to the monomer droplet water interface, such as for example sulfonated polystyrenes, alginates, carboxymethycellulose, tetramethylammonium hydroxide or chloride, diethylaminoethylmethacrylate, water soluble complex resinous amine condensation products such as the water soluble condensation products of diethanolamine and adipic acid, polymethylaminoethanoladipate and the like.

It is at times desirable to add to the water phase, a free radical scavenger that prevents the emulsion polymerization of any monomer in the water phase. This prevents small particles from forming which is undesirable. Any suitable scavenger such as for example potassium dichromate, cupric sulfatepenta hydrate, and the like may be used.

After the monomer droplets coalesce to the final size desired, a protective colloid is added in order to aid in maintaining the larger size particles in the range stated above. Suitable protective colloids include, polyvinyl alcohol, gelatin, polyvinyl pyrrolidone, cellulose ethers such as for example, methylcellulose, hydroxyethylcellulose, methyl hydroxyethylcellulose, hydroxypropylcellulose, methyl hyrdroxypropylcellulose and the like.

After the polymerization of the monomers takes place, the particles thus formed are readily separated from the aqueous medium by suitable separation techniques for example filtration, centrifuging and the like. The particles as separated contain the particulate suspension agent on the surface of the polymer particles. In some applications, this particulate layer may be desired. For example, in the utility as a grinding media, particularly for pharmaceuticals it may be desired to match the composition of the grinding media to the material being ground, in order not to introduce any foreign material into the operation. Latex particle suspension agents as described in U.S. Patent 5,133,992 are particularly suitable for this purpose. The particulate suspension agent can readily be removed from the surface of the particles by washing. For example, when silica is employed as the particulate suspension agent it is removed readily by washing in dilute alkali such as sodium hydroxide and finally rinsing with water to remove any residual caustic.

The invention will be further illustrated by the following example:

### Example 1

To a solution of 2.7 grams of polymethylaminoethanol adipate dissolved in 2 liters of water is added 2.4 grams of Nalcoag® 2329 a 40 percent colloidal suspension of silica sold by Nalco Company). To this is added a monomer mixture of 324 grams of styrene and 1296 grams of divinyl benzene (washed to remove inhibitor) containing 8 grams of 2,2'-azobis (2,4-dimethylpentanenitrile) and 8 grams of 2,2'azobis (2-methylebutanenitrile) sold as Vazo® 52 and Vazo® 67 respectively by DuPont Co. The resulting mixture is rapidly stirred by a laboratory stirrer to obtain a crude emulsion. This is passed twice through a Gaulin Homogenizer to obtain droplets in the 300 to 900 micrometer size range. To this is added a solution of 20 grams of polyvinyl alcohol sold by Air Products Company under the trade designation Vinol® 325 in 430 ml of water. The mixture is heated overnight at 55°C with stirring and then for 3 hours at 85°C. The resulting 300 to 900 micrometer solid particles are washed with water and then with dilute sodium hydroxide solution followed with water to remove the silica.

Uniform 300-900 micrometer solid spherical particles result.

### Eample 2

To a solution of 4.5 grams of polymethylamino ethanoladipate dissolved in 2.25 liters of distilled water is added 4.5 grams of Nalcoag® 2329. To this is added a monomer mixture of 240 grams of styrene, 960 grams of divinylbenzene and 15 grams of 2,2-azobis(2,4-dimethylpentanenitrile). The resulting mixture is rapidly stirred by a laboratory stirrer to obtain a crude emulsion. This crude emulsion is passed two times through a Gaulin homogenizer to obtain monomer droplets in the 200 to 700 micrometer size range. To this is added 0.15 gram potassium dichromate and a solution of 15 grams of polyvinyl alcohol. This mixture is heated at 55°C overnight to give styrenedivinylbenzene particles having a size in the range of 200 to 700 micrometers. The beads are washed with water, and then dilute sodium hydroxide and finally an additional wash with water. Uniform solid spherical particles result.

### Eample 3

The procedure of Example 2 is followed except that the monomer mixture contains 1,000 grams styrene and 200 grams of butyl acrylate and 4 grams of polymethyl-aminoethanol adipate are used in place of 4.5 grams as in Example 2. Further, the overnight heating temperature is 58°C.

The invention has been described in detail with particular reference to certain preferred embodiments, but it will be understood that variations and modifications can be effected within the spirit and scope of the invention.

## Claims

1. A method of making polymeric particles having an average particle diameter of from 200 to 1,000 micrometers which comprises forming a suspension of ethylenically unsaturated monomer droplets in a continuous aqueous phase, the aqueous phase containing an effective amount of a particulate suspension stabilizer to limit the coalescence of the monomer droplets within the average particle diameter range of 200 to 1,000 micrometers, adding to the aqueous phase a water soluble protective colloid and heating to cause the monomer droplets to polymerize.

2. The method of claim 1 wherein the amount of particulate suspension stabilizer is from about 0.05 to about 0.5 percent by weight based on the weight of the monomer droplets.

3. The method of claim 1 or 2 wherein the water soluble protective colloid is present in an effective amount to prevent agglomeration during polymerization.

4. The method in any of claims 1-3 wherein the water soluble protective colloid is present in an amount of at least 0.25 percent by weight based on the weight of the monomer.

5. The method of claim 4 wherein the water soluble protective colloid is present in an amount of from about 0.3 to 5 percent by weight.

6. The method in any of claims 1-6 wherein the particulate suspension stabilizer has a particle size of from 60 to 100 nanometers.

7. The method in any of claims 1-6 wherein the particulate suspension stabilizing agent is silica.

8. The method in any of claims 1-7 wherein the water soluble protective colloid is polyvinyl alcohol.

9. The method in any of claims 1-8 wherein the particulate suspension stabilizer is present in an amount of from about 0.1 to about 0.4 percent by weight and the water soluble protective colloid is present in an amount of from about 0.3 to 5 percent by weight.

## Patentansprüche

1. Verfahren zur Herstellung von Polymerpartikeln mit einem mittleren Partikeldurchmesser von 200 bis 1000 Mikrometern, bei dem man eine Suspension von ethylenisch ungesättigten Monomertröpfchen in einer kontinuierlichen wäßrigen Phase herstellt, wobei die wäßrige Phase eine wirksame Menge eines Partikel-Suspensions-Stabilisators enthält, um die Koaleszenz der Monomertröpfchen innerhalb des mittleren Partikeldurchmesserbereiches von 200 bis 1000 Mikrometern zu begrenzen, bei dem man der wäßrigen Phase ein in Wasser lösliches schützendes Kolloid zugibt, und bei dem man die Monomertröpfchen erhitzt, um sie zu polymerisieren.

2. Verfahren nach Anspruch 1, bei dem die Menge an Partikel-Suspensions-Stabilisator bei etwa 0,05 bis etwa 0,5 Gew.-%, bezogen auf das Gewicht der Monomertröpfchen, liegt.

3. Verfahren nach Anspruch 1 oder 2, bei dem das in Wasser lösliche schützende Kolloid in einer wirksamen Menge vorliegt, um die Agglomeration während der Polymerisation zu verhindern.

4. Verfahren nach einem der Ansprüche 1-3, bei dem das in Wasser lösliche schützende Kolloid in einer Menge von mindestens 0,25 Gew.-%, bezogen auf das Gewicht des Monomeren, vorliegt.

5. Verfahren nach Anspruch 4, bei dem das in Wasser lösliche schützende Kolloid in einer Menge von etwa 0,3 bis 5 Gew.-% vorliegt.

6. Verfahren nach einem der Ansprüche 1-5, bei dem der Partikel-Suspensions-Stabilisator eine Teilchengröße von 60 bis 100 Nanometern aufweist.

7. Verfahren nach einem der Ansprüche 1-6, bei dem das Partikel-Suspensions-Stabilisierungsmittel Silica ist.

8. Verfahren nach einem der Ansprüche 1-7, bei dem das in Wasser lösliche schützende Kolloid Polyvinylalkohol ist.

9. Verfahren nach einem der Ansprüche 1-8, bei dem der Partikel-Suspensions-Stabilisator in einer Menge von etwa 0,1 bis etwa 0,4 Gew.-% vorliegt, und bei dem das in Wasser lösliche schützende Kolloid in einer Menge von etwa 0,3 bis 5 Gew.-% vorliegt.

## Revendications

1. Procédé de préparation de particules de polymères ayant un diamètre de particule moyen de 200 à 1 000 micromètres qui comprend les étapes consistant à former une suspension de gouttelettes d'un monomère à insaturations éthyléniques dans une phase aqueuse continue, la phase aqueuse contenant une quantité efficace de stabilisant sous forme de suspension particulaire en vue de limiter la coalescence des gouttelettes de monomère dans l'intervalle de diamètre de particule moyen de 200 à 1 000 micromètres, à ajouter à la phase aqueuse un colloïde protecteur hydrosoluble et à chauffer afin d'amener les gouttelettes de monomère à polymériser.

2. Procédé selon la revendication 1, dans lequel la quantité de stabilisant sous forme de suspension particulaire est d'environ 0,05 à environ 0,5 pour cent en poids sur la base du poids des gouttelettes de monomère.

3. Procédé selon les revendications 1 ou 2, dans lequel le colloïde protecteur hydrosoluble est présent en une quantité efficace pour empêcher l'agglomération pendant la polymérisation.

4. Procédé selon l'une quelconque des revendications 1 à 3, dans lequel le colloïde protecteur hydrosoluble est présent en une quantité d'au moins 0,25 pour cent en poids sur la base du poids du monomère.

5. Procédé selon la revendication 4, dans lequel le colloïde protecteur hydrosoluble est présent en une quantité d'environ 0,3 à 5 pour cent en poids.

6. Procédé selon l'une quelconque des revendications 1 à 6, dans lequel le stabilisant sous forme de suspension particulaire a une taille de particule de 60 à 100 nanomètres.

7. Procédé selon l'une quelconque des revendications 1 à 6, dans lequel le stabilisant sous forme de suspension particulaire est la silice.

8. Procédé selon l'une quelconque des revendications 1 à 7, dans lequel le colloïde protecteur hydrosoluble est l'alcool polyvinylique.

9. Procédé selon l'une quelconque des revendications 1 à 8, dans lequel le stabilisant sous forme de suspension particulaire est présent en une quantité d'environ 0,1 à environ 0,4 pour cent en poids et dans lequel le colloïde protecteur hydrosoluble est présent en une quantité d'environ 0,3 à 5 pour cent en poids.
